# EUROPEAN PATENT APPLICATION

(11) **EP 2 113 326 A1**
(43) Date of publication of application: **04.11.2009**
(21) Application number: 08740627.8
(22) Date of filing: 18.04.2008
(51) Int. Cl.: B23B 51/06

(54) **GUN DRILL**

(30) Priority: 06.07.2007 JP 2007178627
(71) Applicant: UNITAC, Incorporated, Amagasaki-shi, Hyogo 661-0043 (JP)
(72) Inventor: NOMURA, Takuji, Amagasaki-shi Hyogo 661-0043 (JP); HANABUSA, Nobuyuki, Amagasaki-shi Hyogo 661-0043 (JP)
(74) Representative: Vossius & Partner
(86) International application number: PCT/JP2008/057572
(87) International publication number: WO 2009/008203

(57) **Abstract**

A gun drill in which coolant delivered to a cutting part can be discharged intensively to a chip discharge groove along with the chips, damage on the inner circumference of a drilled hole or fall of machining precision due to clogging with chips can be prevented, and cutting efficiency is enhanced by reducing rotary load and long lifetime can be attained. Coolant supply paths (10, 20) are provided in a tool shank (1) and a cutting head (2), one chip discharge groove (3) is provided in the outer circumferential surface from the proximal side of the tool shank (1) to the distal end of the cutting head (2), discharge ports (22a, 22b) communicating with coolant supply holes (21a, 21b) and a chip discharge groove (3) are provided in the distal end face (2c) of the cutting head (2), and annular protrusions (4a, ... ) are formed in the outer circumferential surface of the cutting head (2) continuously over the entire circumference while bridging above the chip discharge groove (3).

## Description

### [Field of the invention]

The present invention relates to a gun drill used for deep-hole drilling.

### [Background of the invention]

Although various systems, such as a gun drilling system, an ejector system (double tube system), a single tube system, etc., are known as deep-hole drilling systems, the gun drilling system is suitable for deep-hole drilling of a small diameter. That is, generally, a gun drill system employs a gun drill, in which, a hollow tool shank, having a cross section with a shape of 2/3 to 3/4 of a circle, has disposed at a distal end thereof a cutter head with an outer cross section of the same shape, and with this system, cutting is performed while supplying a coolant, supplied through an interior of the tool shank, to a cut portion from a coolant delivery port at a distal end face of the cutter head and cutting chips, which are generated in accordance with the cutting, are discharged to the exterior along with the coolant through a cutting chip discharge groove, having a V-shaped cross section and extending along a lengthwise direction of an outer circumference of the tool shank, and because, in addition to enabling a large flow path cross-sectional area to be secured for the cutting chip discharge groove even in a small diameter system, a feeding pressure of the coolant is determined by a tool length and the feed pressure does not have to be made high even if a cut hole becomes deep, the system is suitable for deep-hole drilling of small diameter.

In one such type of gun drill, a main discharge port, at which a cutting chip discharge groove opens to a distal end face of the cutter head, an auxiliary discharge port, opening to the distal end face at a substantially opposite position in a radial direction with respect to the main discharge port, a bypass flow path port, leading from the auxiliary discharge port to the cutting chip discharge groove through the interior of the head, and two coolant delivery ports, opening to the distal end face at substantially opposite positions in a radial direction, are disposed at the distal end face of the cutter head, and a plurality of blades are formed in a distributive manner so as to face the main discharge port and the auxiliary discharge port (Patent Document 1). Because the coolant is distributed and supplied to the cut portion from the two coolant delivery ports at the distal end face of the cutter head and the cutting chips are efficiently discharged along with the coolant from the main discharge port and the auxiliary discharge port at the distal end face to the cutting chip discharge groove, such a gun drill provides a merit that a high cutting efficiency can be obtained based on the good cutting chip discharge performance.
[Patent Document 1] Japanese Published Unexamined Patent Application No. 2005-118940

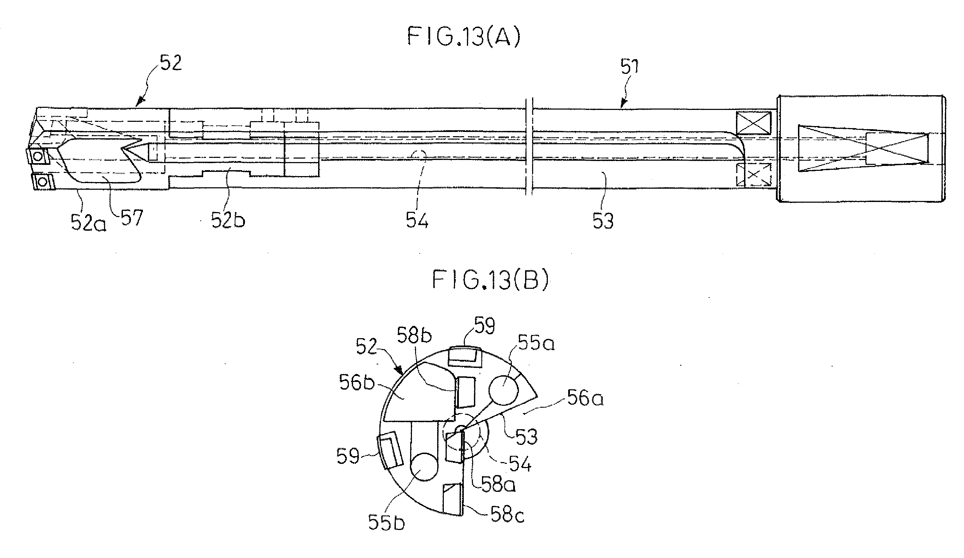

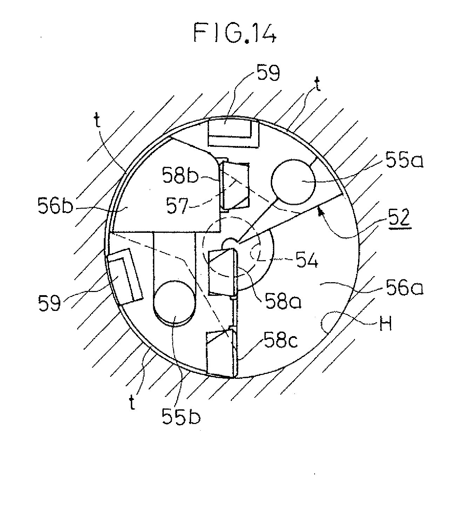

FIGS. 13A, 13B and 14 show an example of a gun drill having a pair of coolant delivery ports and a pair of discharge ports disposed at a distal end face of a cutter head as described above. With this gun drill, a cutter head 52 has a connecting shaft portion 52b spigot-fitted and coaxially connected to a distal end portion of a tool shank 51, a cutting chip discharge groove 53, with a substantially V-shaped cross section, is formed rectilinearly from a proximal side of the tool shank 51 to a distal end of the cutter head 52, and a coolant supply path 54, communicating from an interior of the tool shank 51 to an interior of the connecting shaft portion 52b of the cutter head 52, branches into two inside a main head body 52a and opens as two coolant delivery ports 55a and 55b that are oppositely positioned in a radial direction at a distal end face of the head. At the distal end face of the head, a main discharge port 56a, which is a distal end opening of the cutting chip discharge groove 53, and an auxiliary discharge port 56b, opening at a substantially opposite position in a radial direction with respect to the main discharge port 56a, are disposed, a bypass flow path hole 57, leading from the auxiliary discharge port 56b, through the interior of the head, and to the cutting chip discharge groove, is formed, inner and outer blades 58a and 58c are fixed facing the main discharge port 56a, and an intermediate blade 58b is fixed facing the auxiliary discharge port 56b. 59 indicates guide pads that are fixed to a distal end circumferential face of the cutter head 52.

### [Disclosure of the Invention]

### [Problems to be Solved by the Invention]

However, with the conventional gun drill, because in a drilling process, the outer blade 58c and the guide pads 59 on the cutter head 52 slidingly contact an inner circumference of a cut hole H and thereby gives rise to a gap t between the circumferential face of the cutter head 52 and the inner circumference of the cut hole H as shown in FIG. 14, in many cases, a portion of the coolant that contains cutting chips flows from the distal end face of the head into the gap t and causes clogging by the cutting chips at an outer circumferential portion of the tool shank 51 at the rear side, and this clogging causes flawing of the inner circumference of the cut hole H, lowering of the processing precision as well as increase of a rotational load that leads to breakage of the tool. Such a problem is especially prominent with gun drills having a pair of coolant delivery ports 55a and 55b and a pair of discharge ports 56a and 56b at the distal end face of the cutter head 52 as illustrated and also occurs frequently with other general gun drills as well.

The present invention has been made in view of the above circumstances and an object thereof is to provide a gun drill that can intensively discharge a coolant, delivered to a cut portion, to a cutting chip discharge groove along with cutting chips to thereby prevent flawing of an inner circumference of a cut hole and lowering of processing precision due to clogging by cutting chips and enable improvement of the cutting efficiency and elongation of tool life by lightening of a rotational load.

### [Means for Solving the Problems]

In order to achieve the aforementioned object, a gun drill according to a first aspect of the present invention, described with reference symbols in the drawings, includes; a cutter head 2 installed on a distal end portion of a tool shank 1, a coolant supply paths 10 and 20 communicating both of the cutter head 2 and the tool shank 1 in interiors of the cutter head 2 and a single cutting chip discharge groove 3 disposed rectilinearly in a lengthwise direction along an outer circumferential face extending from a proximal side of the tool shank 1 to the distal end of the cutter head 2; wherein, the cutter head 2 having coolant supply ports 21a and 21b in communication with the coolant supply path 20 at a distal end face 2c thereof and discharge ports (main discharge port 22a and auxiliary discharge port 22b) in communication with the cutting chip discharge groove 3, and having an outer circumferential face provided with annular protrusion portions 4a ... continuously over the entire circumference thereof while bridging above the chip discharge groove 3.

According to a second aspect of the present invention, in the gun drill according to the first aspect, a plurality of the annular protrusion portions 4a are disposed in parallel and form a labyrinth seal portion 4.

According to a third aspect of the present invention, in the gun drill according to the first aspect, the cutter head 2 has a main discharge port 22a, at which the cutting chip discharge groove 3 opens to the distal end face, an auxiliary discharge port 22b, opening to the distal end face at a position substantially opposite the main discharge port 22a in a radial direction, a bypass flow path port 23, leading from the auxiliary discharge port 22b to the cutting chip discharge groove 3 through the interior of the head, and two coolant delivery ports 21a and 21b, opening to the distal end face at substantially opposite positions in a radial direction, a plurality of blades 5a to 5c are formed and distributed so as to face the main discharge port 22a and the auxiliary discharge port 22b, and the annular protrusion portions 4a are positioned closer to the proximal side of the head than a merging section at which the bypass flow path hole 23 joins the cutting chip discharge groove 3.

According to a fourth aspect of the present invention, in the gun drill according to the first aspect, a proximal end portion (connecting shaft portion 2b) of the cutter head 2 is detachably and coaxially connected to the distal end portion of the tool shank 1.

According to a fifth aspect of the present invention, in the gun drill according to any of the first to fourth aspect, the tool shank 1 has a main shank body 11 having a C-shaped cross-section at least at a forming part of a cutting chip discharge groove 3 inside thereof, and a pipe member 12, which is inserted and fitted in the main shank body 11, an interior of which constitutes a coolant supply path 10; wherein a front end portion of the pipe member 12 is attached to the main shank body 11 side via an external screw 12a on its outer circumference.

Effects of the present invention shall now be described using the reference numbers provided in the drawings. Firstly, the gun drill according to the first aspect of the present invention, in a drilling process, although a part of the coolant containing cutting chips that is delivered from the coolant delivery ports 21a and 21b at the distal end face of the cutter head 2 flows into a gap t between a circumferential face of the cutter head 2 and an inner circumference of a cut hole H, instead of flowing into the discharge ports 22a and 22b, because this gap t is plugged at positions of annular protrusion portions 4a ...formed at the cutter head 2 preventing from further entry in a rearward direction, in consequence, substantially all of the coolant is concentrated in the cutting chip discharge groove 3 at the positions of the annular protrusion portions 4a and the cutting chips riding on the flow of the coolant are thus powerfully discharged rearward through the cutting chip discharge groove 3, without giving rise to a clogging by cutting chips. Accordingly, damages on the inner circumference of the cut hole or a deterioration of machining precision due to clogging with chips can be prevented, and cutting efficiency is enhanced by reducing rotary load and long lifetime the gun drill itself can be attained.

According to the second aspect of the present invention, because the labyrinth seal portion 4, in which the plurality of annular protrusion portions 4a of the cutter head 2 are disposed in parallel, is formed, a coolant entry prevention effect of the annular protrusion portions 4a is high and clogging by cutting chips is prevented more reliably.

According to the third aspect of the present invention, the cutter head 2 has the pair of coolant delivery ports 21a and 21b and the pair of discharge ports 22a and 22, and conventionally such arrangement gives rise readily to a clogging by cutting chips in spite of achieving a high cutting efficiency. However, clogging by cutting chips is prevented by the annular protrusion portions 4a ... formed at the cutter head 2 only the merit of high cutting efficiency of the arrangement can be provided.

According to the fourth aspect of the present invention, because the cutter head 2 is an independent member that is attachable/detachable with respect to the tool shank 1, exchange with a new head upon wear or damage and exchange with different types of head according to drilling conditions are enabled and a merit of enabling forming and processing of the annular protrusion portions 4a to be readily and inexpensively performed according to each head is provided.

According to the fifth aspect of the present invention, because the coolant supply path 10 inside the tool shank 1 is constituted by the pipe member 12 and the front end side of the pipe member 12 is attached to the main shank body 11 side via a screw, there is a beneficial point in that processing and manufacture of the tool shank 1 can be readily and inexpensively performed.

### [Brief Description of the Drawings]

[FIG. 1] shows a gun drill according to a first embodiment of the present invention, with FIG. 1A being a side view of an entirety of the gun drill and FIG. 1B being a front view.
[FIG. 2] is a longitudinal sectional side view of a cutter head side of the gun drill during a drilling process.
[FIG. 3] is a sectional view taken on line V-V of FIG. 2.
[FIG. 4] is a sectional view taken on line W-W of FIG. 2.
[FIG. 5] is a side view of the cutter head used in the gun drill.
[FIG. 6] is a sectional view taken on line X-X of FIG. 5.
[FIG. 7] is a sectional view taken on line Y-Y of FIG. 6.
[FIG. 8] is a longitudinal sectional side view of a tool shank used in the gun drill.
[FIG. 9] is a sectional view taken on line Z-Z of FIG. 8.
[FIG. 10] shows a procedure of connecting a connecting shaft portion of the cutter head to a main shank body of the tool shank of the gun drill, with FIG. 10A being a longitudinal sectional side view of the main shank body and the connecting portion before fitting, FIG. 10B being a longitudinal sectional side view of a rotation operation after fitting, and FIG. 10C being a longitudinal sectional side view of an operation of fixing by a side lock method.
[FIG. 11] shows a pipe stopping member used in the tool shank, with FIG. 11A being a front view, FIG. 11B being a longitudinal sectional side view, and FIG. 11C being a sectional view taken on line C-C of FIG. 11B.
[FIG. 12] is a longitudinal sectional side view of an operation of connecting a pipe member to the pipe stopping member of the tool shank.
[FIG. 13] shows an arrangement example of a conventional gun drill, with FIG. 13A being a side view of an entirety of the gun drill and FIG. 13B being a front view.
[FIG. 14] is a longitudinal sectional side view of a state of drilling by the conventional gun drill.

### [Description of the Symbols]

- 1: tool shank
- 10: coolant supply path
- 11: main shank body
- 11a: connecting recess portion
- 12: pipe member
- 12a: external thread
- 13: pipe stopping member
- 13b: internal thread
- 2: cutter head
- 2a: main head body
- 2b: connecting shaft portion (base end portion)
- 20: coolant supply path
- 21a: coolant delivery port
- 21b: coolant delivery port
- 22a: main discharge port
- 22b: auxiliary discharge port
- 23: bypass flow path hole
- 24: bridging portion
- 3: cutting chip discharge groove
- 4: labyrinth seal portion
- 4a: annular protrusion portion
- 5a: inner blade
- 5b: intermediate blade
- 5c: outer blade

### [Best Modes for Carrying out the Invention]

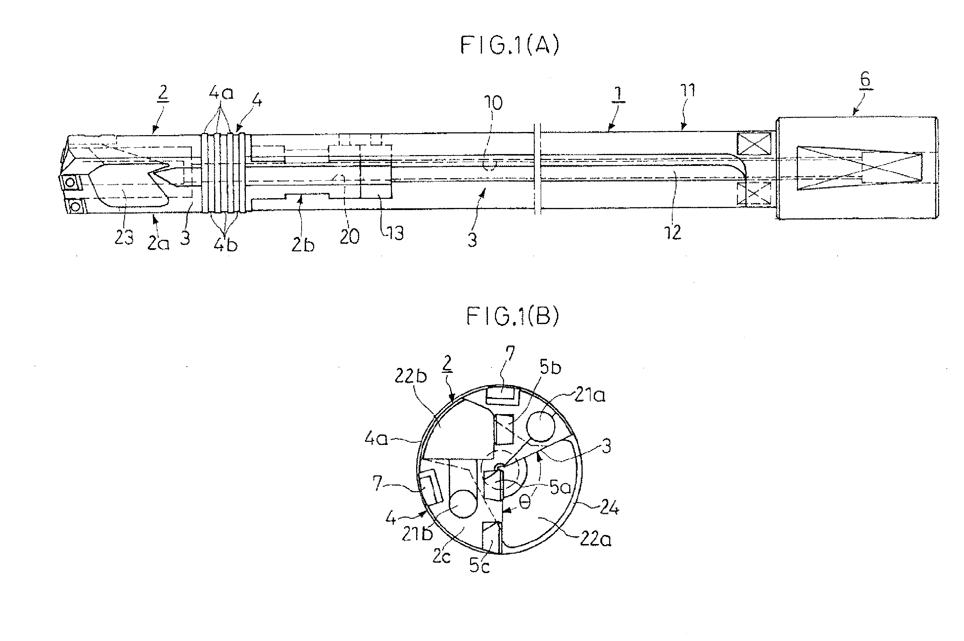

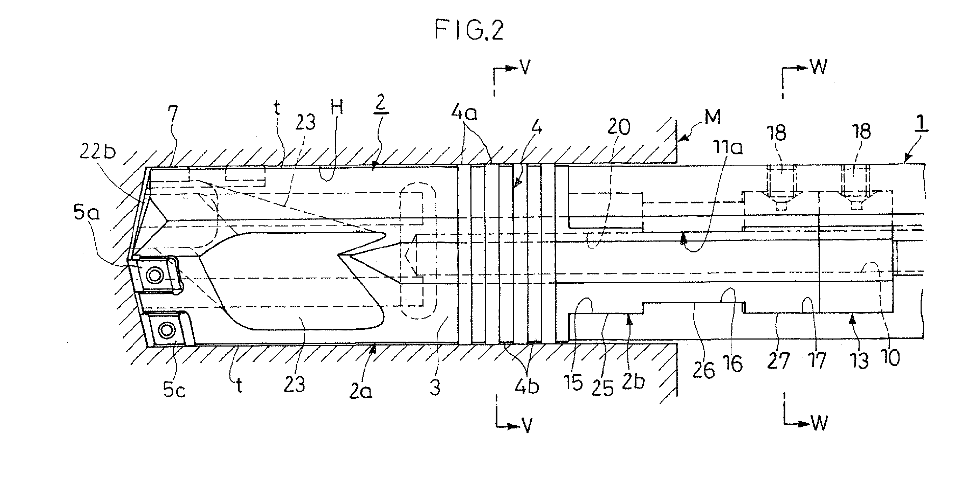

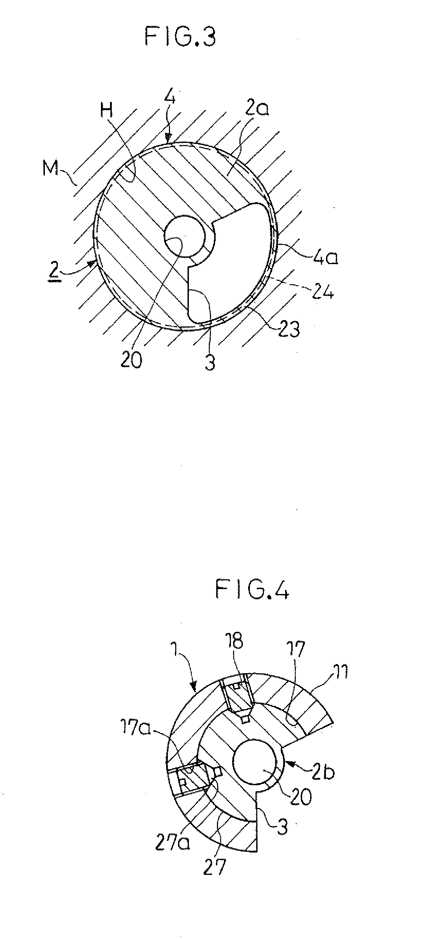

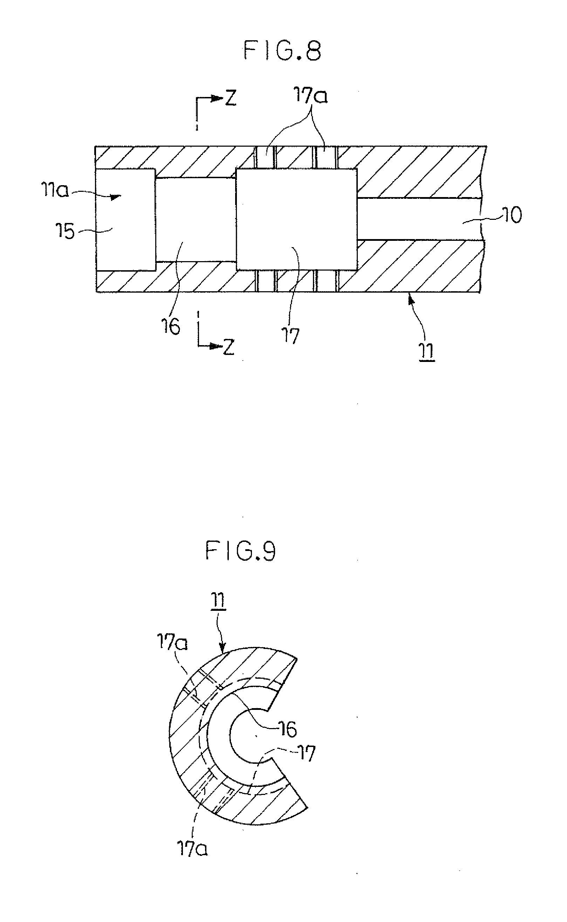

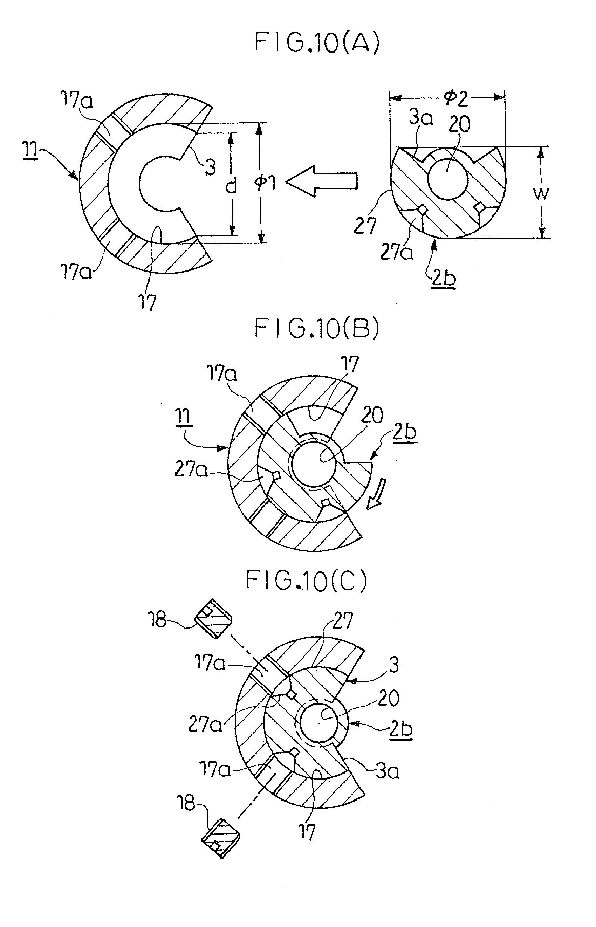

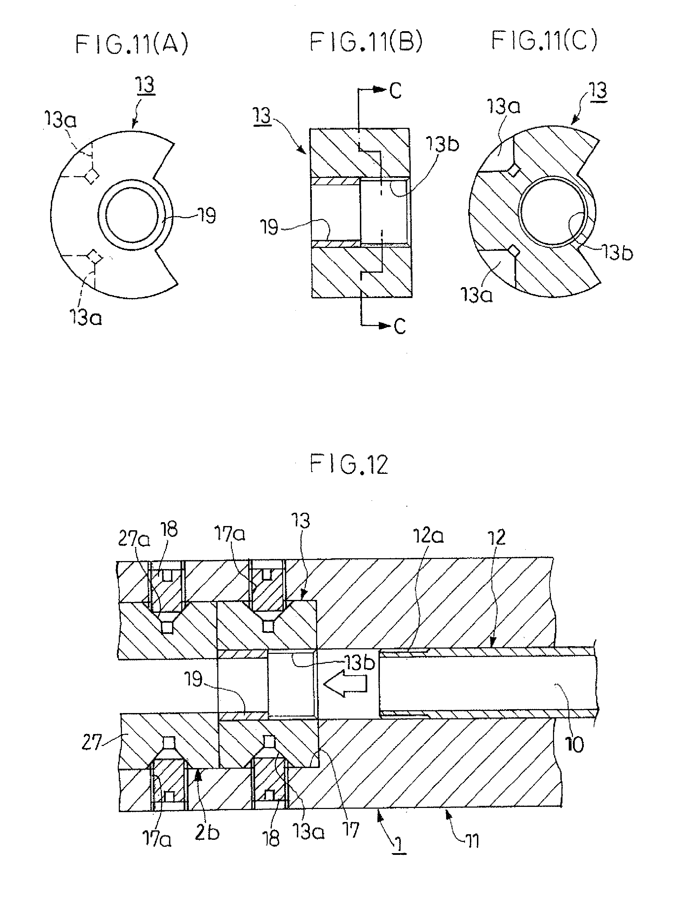

An embodiment of a gun drill according to the present invention shall now be specifically described with reference to the drawings. FIGS. 1A and 1B show a side view and a front view of an entirety of a gun drill according to the embodiment, FIG. 2 shows a state of drilling by the gun drill, FIGS. 3 and 4 show sectional views of principal portions in FIG. 2, FIGS. 5 to 7 show a cutter head of the gun drill, FIGS. 8 and 9 show a tool shank of the gun drill, FIG. 10 shows an operation of connecting the cutter head and the tool shank, FIG. 11 shows a pipe receiving member of the tool shank, and FIG. 12 shows an operation of connecting a main shank body of the tool shank and a pipe member.

As shown in FIG. 1A, this gun drill is constituted of an elongate tool shank 1, an interior of which is arranged as a coolant supply path 10, a cutter head 2, coaxially connected to a distal end of the tool shank 1, and a large-diameter, cylindrical driver 6, inserted and fitted and fixed to a proximal end portion of the tool shank 1, a coolant supply path 20, communicating with the coolant supply path 10 of the tool shank 1, is disposed inside the cutter head 2, and a single, rectilinear, cutting chip discharge groove 3 that extends in a lengthwise direction is disposed on an outer circumferential face from a proximal side of the tool shank 1 to a distal end of the cutter head 2. As shown in FIG. 1B, the cutting chip discharge groove 3 has a fan-shaped cross section with an opening angle of θ100 to 130° from centers of the tool shank 1 and the cutter head 2.

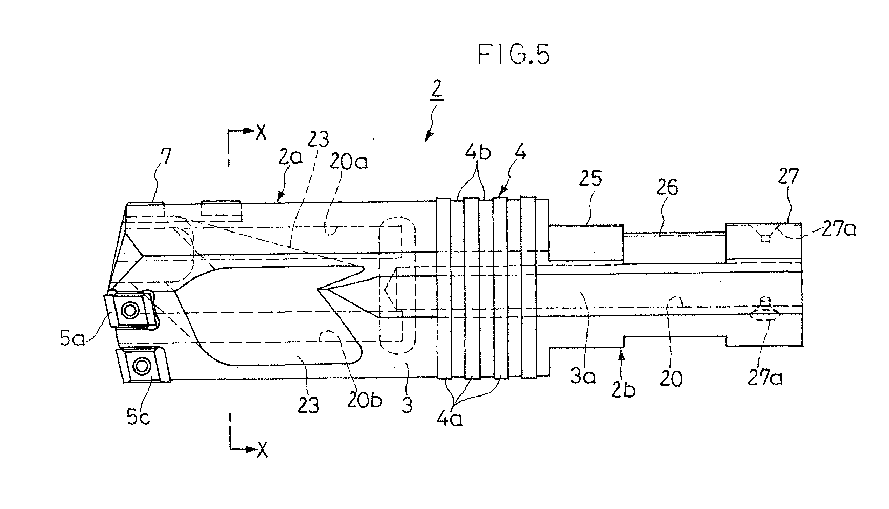

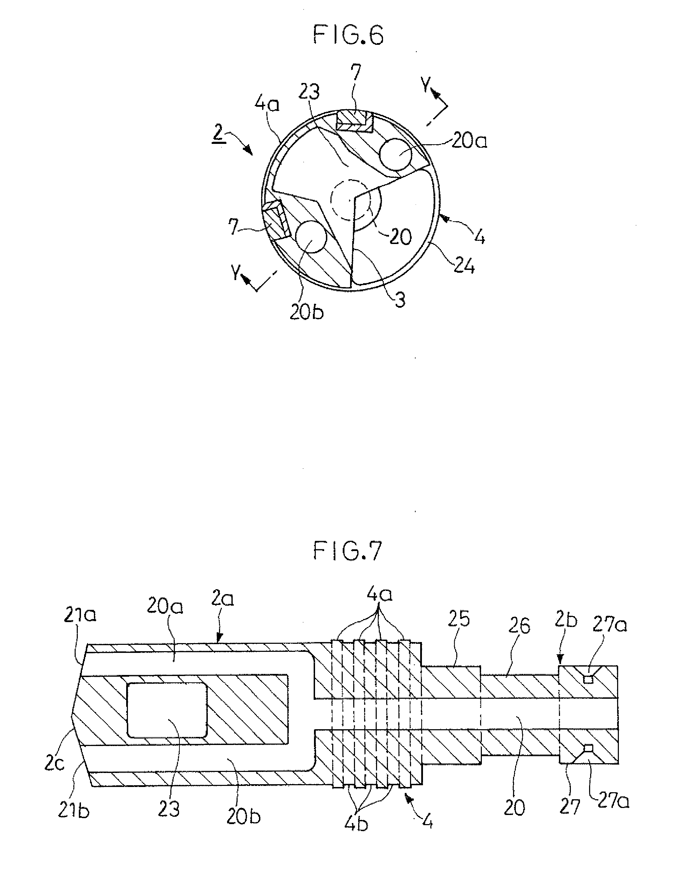

As shown in FIG. 1B and in detail in FIGS. 5 to 7, the cutter head 2 is constituted of a main head body 2a at a front side and a thin-diameter, connecting shaft portion 2b, protruding coaxially from a rear end of the main head body 2a, and has in the interior thereof the coolant path 20, in communication with the coolant supply path 10 inside the tool shank 1, As shown in FIGS. 6 and 7, the coolant path 20 branches into two at the main head body 2a side, and the branch paths 20a and 20b open to a distal end face of the head as coolant delivery ports 21a and 21b at opposite side positions in a radial direction. In the cutter head 2, a bottom portion of the cutting chip discharge groove 3 forms a convex arcuate face from a rear portion of the main head body 2a to the connecting shaft portion 2b due to the presence of the coolant supply path 20 of circular cross section at an axial center position (FIG. 6).

On the main head body 2a are formed a main discharge port 22a, with which the cutting chip discharge groove 3 opens to a head distal end face 2c, an auxiliary discharge port 22b, opening to the head distal end face 2c at a position substantially opposite the main discharge port 22a in a radial direction, a bypass flow pathhole 23 as shown in FIG. 2, leading from the auxiliary discharge port 22b to the cutting chip discharge groove 3 through the interior of the head, and two coolant delivery ports 21a and 21b, opening to the distal end face at substantially opposite positions in a radial direction. At a distal end side of the main head body 2a, inner and outer blades 5a and 5c, constituted of throwaway tips, are fixed by screwing so as to face the main discharge port 22a, an intermediate blade 5b is fixed facing the auxiliary discharge port 22b, and guide pads 7, are fixed by screwing at opposite side positions of the circumferential face that sandwich the auxiliary discharge port 22b.

At a rear side of the main head body 2a, a bridging portion 24 that arcuately spans the cutting chip discharge groove 3 is formed as an extension of an outer circumferential portion, and on an outer circumferential face passing along the bridging portion 24, a plurality (four in the figure) of annular protrusion portions 4a are disposed in parallel to form a labyrinth seal portion 4. At each annular protrusion portion 4a, an outer diameter of the labyrinth seal portion 4 is set substantially equal to a cutting diameter of the outer blade 5c and an outer circumferential face of each annular recess 4b between the annular protrusion portions 4a is at the same surface level as the outer circumferential face at the head distal end side than the labyrinth seal portion 4.

By a recessed step 26, as shown in PIG. 7, formed circumferentially at a central portion in an axial direction of the connecting shaft portion 2b of the cutter head 2, a rear end side of the connecting shaft portion 2b is arranged as a spigot protrusion 27 of the same outer diameter as a base 25 side (front end side), and mortar-shaped latching recesses 27a are disposed at two locations that are separated by 90 degrees in a circumferential direction on an outer circumferential face of the spigot protrusion 27. Thus a groove portion 3a (FIG. 5), constituting a bottom side of the cutting chip discharge groove 3, is formed across a total length in the axial direction of a circumferential face portion of the connecting shaft portion 2b.

Meanwhile, the tool shank 1, as shown in FIG. 12, has a main shank body 11, which, besides a cylindrical proximal end side, has a C-shaped diametrical section, a pipe member 12, which is inserted and fitted in close contact in an inner side of the main shank body 11 and the interior of which constitutes the coolant supply path 10, and a pipe stopping ring 13, which is internally fitted to a proximal end side of the main shank body 11, and a bottom portion of the cutting chip discharge groove 3 takes on the form of a convex arcuate face due to exposure of a circumferential face of a portion of the pipe member 12. Thus an outer diameter of the main shank body 11 is set equal to an outer diameter of a portion of the main head body 2a of the cutter head 2 at a front side of the labyrinth seal portion 4. An outer shape and outer dimension (outer diameter and width in the axial direction) of the pipe stopping ring 13 are set equal to those of the spigot protrusion 27 of the connecting shaft portion 2b of the cutter head 2.

As shown in FIGS. 8 and 9, a connecting recess portion 11a, in which the connecting shaft portion 2b of the cutter head 2 and the pipe stopping ring 13 are fitted, is formed at an inner circumference at a distal end side of the main shank body 11 of the tool shank 1. The connecting recess portion 11a is constituted, from the distal end side, of a wide-mouth portion 15, corresponding to the base 25 of the connecting shaft portion 2b of the cutter head 2, a protruding step 16, corresponding to the recessed step 26, and an inner wide portion 17, being of the same inner diameter as the wide mouth portion 15 and corresponding to the spigot protrusion 27 and the pipe stopping ring 13, and in the inner wide portion 17, threaded holes 17a, are bored in radial directions at two locations, that is, front and rear locations and at a phase difference of 90 degrees.

To connect the tool shank 1 and the cutter head 2, the connecting shaft portion 2b of the cutter head 2 is fitted from the side into the connecting recess portion 11a of the main shank body 11 and fixed by a side lock method method. That is, as shown in FIG. 10A, whereas the inner diameter ϕ1 of the inner wide portion 17 of the connecting recess portion 11a is substantially equal to the outer diameter ϕ2 of the spigot protrusion 27 of the connecting shaft portion 2b, a width d of the opening facing the cutting chip discharge groove 3 is wider than a minimum width w, passing through a center of the spigot protrusion 27, and because the same relationship holds between the wide mouth portion 15 and the protruding step 16 of the connecting recess portion 11a and the base 25 and the recessed step 26 of the connecting shaft portion 2b, the connecting shaft portion 2b is put in an orientation that differs by approximately 90 degrees from a proper orientation as illustrated and fitted from the side into the connecting recess portion 11a, the connecting shaft portion 2b that has been fitted is then relatively rotated as shown in FIG. 10B so that the groove part 3a matches the cutting chip discharge groove 3, and side locking screws 18 are then screwed into the threaded holes 17a of the main shank body 11 and distal end portions of the screws are fitted in and put in pressed contact with the latching recesses 27a of the connecting shaft portion 2b as shown in FIG. 10C to fix both components 1 and 2 in a manner disabling relative displacement. Such a connection method is disclosed in detail in Japanese Published Unexamined Patent Application No. 2005-118940 (Patent Document 1) and Japanese Published Unexamined Patent Application No. 2006-234030 filed by the present applicant.

Because the pipe stopping ring 13 is the same in outer shape and outer dimensions as the spigot protrusion 27 of the connecting shaft portion 2b of the cutter head 2 and has mortar-shaped latching recesses 13a disposed at two locations on an outer circumferential face as shown in FIG. 11, the pipe stopping ring 13 is fixed to the connecting recess portion 11a of the main shank body 11 at a position more to the inner side than the spigot protrusion 27 by a side lock method in the same manner as the spigot protrusion 27. Thus the pipe stopping ring 13 has an internal thread 13b, which is formed on an inner circumference across half an axial direction width and onto which an external thread 12a, at a distal end side of the pipe member 12 that is fitted into the inner side of the main shank body 11, is fixed by screwing as shown in FIG. 12, and has a sealing ring 19, formed of a short, cylindrical elastic material, internally fitted in the remaining half of the inner circumference. The sealing ring 19 seals, in a liquid tight manner, contact surfaces of the pipe stopping ring 13 and the rear end of the connecting shaft portion 2b of the cutter head 2 and the portion at which the internal thread 13b of the pipe stopping ring 13 and the external thread 12a of the pipe member 12 are screwed together and thereby serves a function of preventing coolant of high pressure that passes through the interior of the coolant supply path from leaking to the exterior.

In a drilling process using the gun drill of the above arrangement, cutting of a workpiece M is performed while supplying the coolant, supplied through the coolant supply paths 10 and 20 inside the tool shank 1 and the cutter head 2, to the cut portion from the coolant delivery ports 21a and 21b at the head distal end face 2c, and at the same time, cutting chips that are generated in accordance with the drilling are made to flow along with the coolant into the main and auxiliary discharge ports 22a and 22b and discharged to the exterior through the cutting chip discharge groove 3 on the circumferential face, and as shown in FIGS. 2 and 3, at the head distal end side, because a gap t is present between the outer circumferential face of the cutter head 2 and an inner circumferential face of a cut hole H at a position away from the main discharge port 22a, a portion of the cutting chips flows along with the coolant into this gap t. However, because the gap t is substantially plugged by the annular protrusion portions 4a at the labyrinth seal portion 4 of the cutter head 2, the coolant, containing the cutting chips, that had flowed into the gap T is also made to flow into the cutting chip discharge groove 3, and because substantially all of the coolant supplied to the cut portion is thus concentrated into the cutting chip discharge groove 3 and all of the cutting chips are made to ride on this flow and be discharged powerfully rearward through the cutting chip discharge groove 3, clogging by cutting chips does not occur at the periphery of the tool shank 1, flawing of the inner circumference of the cut hole H and lowering of the processing precision due to clogging by cutting chips are prevented, and by the lightening of a rotational load, the cutting efficiency is improved and the life of gun drill itself is elongated.

Although an example where the respective pairs of the coolant delivery ports 21a and 21b and discharge ports 22a and 22b are disposed at the distal end face 2c of the cutter head 2 was described with the embodiment above, the present invention is also applicable to a gun drill with which there is just one of either or both the coolant delivery port and discharge port. However, because conventionally with an arrangement having respective pairs of the coolant delivery ports and discharge ports as in the embodiment, clogging by cutting chips occurs readily even though a high cutting efficiency is obtained, the effect of application of the present invention is especially high with such an arrangement.

The gun drill according to the present invention also includes an arrangement where a single annular protrusion portion 4a that bridges the cutting chip discharge groove 3 and is continuous along the entire circumference is disposed on the outer circumferential face of the cutter head 2. However, by providing the labyrinth seal portion 4, in which the plurality of annular protrusion portions 4a are disposed in parallel, as in the embodiment, the coolant entry prevention effect by the annular protrusion portions 4a is made high and a merit that clogging by cutting chips is prevented more reliably is provided.

Furthermore, although the present invention also includes an arrangement where the cutter head 2 is brazed to a distal end portion of the shank 1, by making the cutter head 2 an independent member that is attachable/detachable with respect to the tool shank 1 as in the present embodiment, exchange with a new head upon wear or damage and exchange with different types of head according to cutting conditions are enabled, and forming and processing of the annular protrusion portions 4a can be performed readily and inexpensively according to each head. In the case where the cutter head 2 is made detachably exchangeable, various methods besides that employed in the embodiment may be applied as the method for connection to the tool shank 1.

Also, although the tool shank 1 may be arranged as a single member, by employing the structure where the coolant supply path 10 of the tool shank 1 is constituted of the pipe member 12 and the front end side of the pipe member 12 is attached by screwing to the main shank body 11 side, the merit that processing and manufacturing the tool shank 1 can be performed readily and inexpensively is provided. Although in the embodiment, the front end portion of the pipe member 12 is fixed by screwing by the pipe stopping member 13, a method, where an internal thread is provided in the main shank body 11 and the front end portion of the pipe member 12 is directly fixed by screwing to the main shank body 11 may be employed in place of using the pipe stopping member 13. Besides this, with the present invention, blades may be formed integrally to the main head body 2a in place of using throwaway tips as the blades of the cutter head 2 as in the present embodiment, the number of blades may be set variously, and various other design changes besides those of the embodiment may be applied to other arrangement details.

## Claims

1. A gun drill comprising: a cutter head installed on a distal end portion of a tool shank, a coolant supply path communicating both of the cutter head and the tool shank in interiors of the cutter head and a single cutting chip discharge groove disposed rectilinearly in a lengthwise direction along an outer circumferential face extending from a proximal side of the tool shank to the distal end of the cutter head; wherein, the cutter head having coolant supply ports in communication with the coolant supply path and discharge ports in communication with the cutting chip discharge groove at a distal end face thereof, and having an outer circumferential face provided with annular protrusion portions continuously over the entire circumference thereof while bridging above the chip discharge groove.

2. The gun drill according to Claim 1, wherein a plurality of the annular protrusion portions are disposed in parallel and form a labyrinth seal portion.

3. The gun drill according to Claim 1, wherein the cutter head has a main discharge port, at which the cutting chip discharge groove opens to the distal end face, an auxiliary discharge port, opening to the distal end face at a position substantially opposite the main discharge port in a radial direction, a bypass flow path port, leading from the auxiliary discharge port to the cutting chip discharge groove through the interior of the head, and two coolant delivery ports, opening to the distal end face at substantially opposite positions in a radial direction, a plurality of blades are distributed and formed so as to face the main discharge port and the auxiliary discharge port, and the annular protrusion portion is positioned closer to the proximal side of the head than a merging section at which the bypass flow path hole joins the cutting chip discharge groove.

4. The gun drill according to any one of the preceding Claims 1 to 4, wherein a proximal end portion of the cutter head is detachably and coaxially connected to the distal end portion of the tool shank.

5. The gun drill according to Claim 1, wherein the tool shank has a main shank body having a C-shaped cross-section at least at a forming part of the cutting chip discharge groove inside thereof, a pipe member, which is inserted and fitted in the main shank body, comprising a coolant supply path inside thereof; wherein a front end portion of the pipe member is attached to the main shank body side via an external screw on its outer circumference.
